# EUROPEAN PATENT SPECIFICATION

(11) **EP 4 138 571 B1**
(45) Date of publication and mention of the grant of the patent: **04.06.2025**
(21) Application number: 21721514.4
(22) Date of filing: 27.04.2021
(51) Int. Cl.: A23C 20/02, A23L 2/38, A23C 11/10, A23L 2/66, A23L 11/60, A23L 25/00

(54) **METHODS OF PROCESSING CULINARY NUTS AND EXTRACTION PRODUCTS OBTAINED BY THE SAME**
VERFAHREN ZUR VERARBEITUNG VON NÜSSEN ZU SPEISEZWECKEN UND DARAUS ERHALTENE EXTRAKTIONSPRODUKTE
PROCÉDÉS DE TRAITEMENT DE NOIX ET PRODUITS D'EXTRACTION AINSI OBTENUS

(30) Priority: 27.04.2020 EP 20171571; 19.11.2020 EP 20208604
(43) Date of publication of application: 01.03.2023
(73) Proprietor: Re-Nut AG, 9000 St. Gallen (CH)
(72) Inventor: LAUX, Roland, 9325 Roggwil (CH); HÜHN, Tilo, 8824 Schönenberg (CH)
(74) Representative: Grünecker Patent- und Rechtsanwälte PartG mbB
(86) International application number: PCT/EP2021/060907
(87) International publication number: WO 2021/219589

(56) References cited:
- WO-A1-2017/163178
- WO-A1-2019/020834
- CN-A- 101 280 327
- US-A1- 2015 044 748
- US-A1- 2016 338 389
- US-A1- 2020 015 492

## Description

### FIELD OF INVENTION

This invention relates to methods and/or techniques for the production of extracts on the basis of culinary nuts, which enable rapid, inexpensive, and improved extraction, as well as high yields of usable aromatic constituents and nutritionally beneficial components.

In certain embodiments, this invention relates to products obtained by making use of said culinary nut extracts.

### BACKGROUND OF THE INVENTION

In the recent years, there has been an increasing interest in the preparation of vegetable-based alternatives to dairy products (e.g. dairy milk and cheese) to address digestive problems (particularly lactose intolerance) or other health related problems, promote vegan nutrition or to mitigate environmental problems associated with extensive livestock farming. Especially plant-based milk analogues, such as soy based milk, rice milk, oat milk and nut-based milk, for example, enjoy a growing popularity.

In WO 2013/078510 A1, a process for the preparation of a nut-based milk analogue composition is disclosed, which includes the addition of dry ingredients to nuts or seeds as fat components in order match the nutritional profile of dairy milk.

GB 2 413 932 A discloses a method for making almond milk by diluting an almond paste prepared by mixing crushed or ground almond with raw cane sugar and a stabiliser.

AU 201720433 B2 proposes the preparation of nut butter, which may be mixed together with water in a specialized mixing device to provide emulsified nut milk.

WO 2017/163178 A1 discloses a production method for hazelnut beverages, including a step of grinding natural hazelnut kernels and water together in a bladed grinder.

CN 101280327 A describes a process of an enzymatic ultrasonic treatment of walnuts for the preparation of walnut oil and extraction of proteins and peptides.

In EP 2 476 317 A1, a process of preparing almond drinks is disclosed, comprising subjecting almonds to a heat treatment, dry grinding and dispersion in an aqueous medium.

US 9,011,949 B2 discloses methods and compositions for the production of cheese replicas by enzymatic curdling of non-dairy milk, wherein the non-dairy milk is produced by coarsely decompounding nuts or plant seeds in a solution comprising water, followed by removal and discarding of insoluble solids to alleviate the grainy mouthfeel of the nut milk. On the other hand, US 2020/0015492 A1 and US 2016/0338389 A1 disclose methods of making non-dairy milk, which comprise decompounding a slurry comprising nuts and/or seeds, and fine-milling the decompounded slurry in a shear mill without subsequent separation of the insoluble solids. WO 2019/020834 A1 discloses an extraction method based on animal-derived products. US 2015/044748 A1 relates to the processing of plant remains, particularly cocoa shells.

However, conventional methods of preparing nut-based extracts (including non-dairy milk) often have the problem that it is difficult to simultaneously achieve favorable organoleptic properties, tasty appearance and high yields of nutritionally favorable components without a large number of processing steps, elaborate equipment and high production costs. Accordingly, it remains desirable to provide a method which consistently overcomes these disadvantages.

Moreover, recent studies indicate that the shell materials of numerous culinary nuts contain valuable dietary fibers and especially high amounts of antioxidants, such as polyphenols and flavonoids, which play an important role in the absorption or neutralisation of free radicals. For example, high antioxidant activity has been reported for shell materials of peanuts (B. Adhikari et al., Journal of the Saudi Society of Agricultural Sciences 2019, 18, 437-442), Pecan nuts (A. C. Pinheiro do Prado et al., Grasas Y Aceites 2009, 60(4), 330-335) and hazelnuts (T. Esposito et al., International Journal of Molecular Sciences 2017, 18, 392.). In conventional processing for food consumption, the shell and skin materials of nuts are often considered as undesired by-products and are discarded, which not only represents an economic problem for the producers but may also lead to a serious impact on the environment due to the combustion of residues.

Therefore, it would be desirable to provide a method which is capable of effectively processing in-shell culinary nuts to alleviate the aforementioned problems and simultaneously providing high yields of the bioactive materials present in the non-shelled nuts.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

Generally speaking, in one aspect the present invention provides a method for processing culinary nuts, comprising the steps of: a) adding water to culinary nuts selected from tree nuts, peanuts or drupe seeds to form a suspension; b) wet grinding said suspension in one or more steps to an average particle size of less than 100 µm measured as volume moment mean (D[4,3]) by laser photometry; and c) separating the suspension into at least a solid phase comprising culinary nut solids and a liquid phase comprising culinary nut milk; and wherein the culinary nuts include a shell and the culinary nuts subjected to wet grinding are non-shelled, or wherein the method further comprises adding culinary nut shell material ground to an average particle size of less than 100 µm measured as volume moment mean (D[4,3]) by laser photometry to the suspension in steps a) or b), or to at least one of the solid phase or liquid phase after step c); and the culinary nut shell material is selected from shell material from almonds, pecans, walnuts, cashews, pistachios, peanuts, kola nuts, palm nuts, hazelnuts, filberts, Brazil nuts, macadamia nuts, chestnuts, and mixtures thereof. Advantageously, said method allows optimized extraction and yield of nutritionally beneficial components and provides a route to a variety of novel usable extracts and products, while enabling fast and inexpensive processing. Advantageously, the method further allows processing of non-shelled culinary nuts as starting materials, so that elaborate separation of shell and husk material in advance may be omitted, which further simplifies the process and improves the yield of nutritionally useful components present in the shell.

In further aspects, the present invention relates to a culinary nut milk prepared by a method as specified in the claims, a solid phase obtained by a method as specified in the claims, and to edible culinary nut-based products which comprise said solid phase and/or the aforementioned culinary nut milk.

In other aspects, the present invention relates to a method for the preparation of a culinary nut oil as identified in the claims, as well as a culinary nut oil obtained by said method.

### BRIEF DESCRIPTION OF THE DRAWINGS

FIG. 1 is a flow chart illustrating an exemplary method of processing culinary nuts to provide extracts such as milk, dried extracts, aromas and nut oils according to the present invention.
FIG. 2 schematically illustrates an exemplary method of preparing non-dairy yoghurt from the culinary nut milk according to the present invention.
FIG. 3 illustrates an exemplary method of preparing non-dairy yoghurt from the culinary nut milk of the present invention.
FIG. 4 shows the attributes related to appearance, taste and mouthfeel evaluated for exemplary culinary nut-based drinks.
FIG. 5 shows the results of the orthonasal sensory analysis evaluated for exemplary culinary nut-based drinks by consensus profiling.
FIG. 6 shows the results of the retronasal sensory analysis evaluated by consensus profiling of exemplary culinary nut-based drinks.

### DETAILED DESCRIPTION OF THE INVENTION

For a more complete understanding of the present invention, reference is now made to the following description of the illustrative embodiments thereof:

### Method of Processing Culinary Nuts

In a first embodiment, the present invention generally relates to a method for processing culinary nuts, comprising the steps of: a) adding water to culinary nuts selected from tree nuts, peanuts or drupe seeds to form a suspension; b) wet grinding said suspension in one or more steps to an average particle size of less than 100 µm measured as volume moment mean (D[4,3]) by laser photometry; and c) separating the suspension into at least a solid phase comprising culinary nut solids and a liquid phase comprising culinary nut milk; and wherein the culinary nuts include a shell and the culinary nuts subjected to wet grinding are non-shelled, or wherein the method further comprises adding culinary nut shell material ground to an average particle size of less than 100 µm measured as volume moment mean (D[4,3]) by laser photometry to the suspension in steps a) or b), or to at least one of the solid phase or liquid phase after step c); and the culinary nut shell material is selected from shell material from almonds, pecans, walnuts, cashews, pistachios, peanuts, kola nuts, palm nuts, hazelnuts, filberts, Brazil nuts, macadamia nuts, chestnuts, and mixtures thereof.

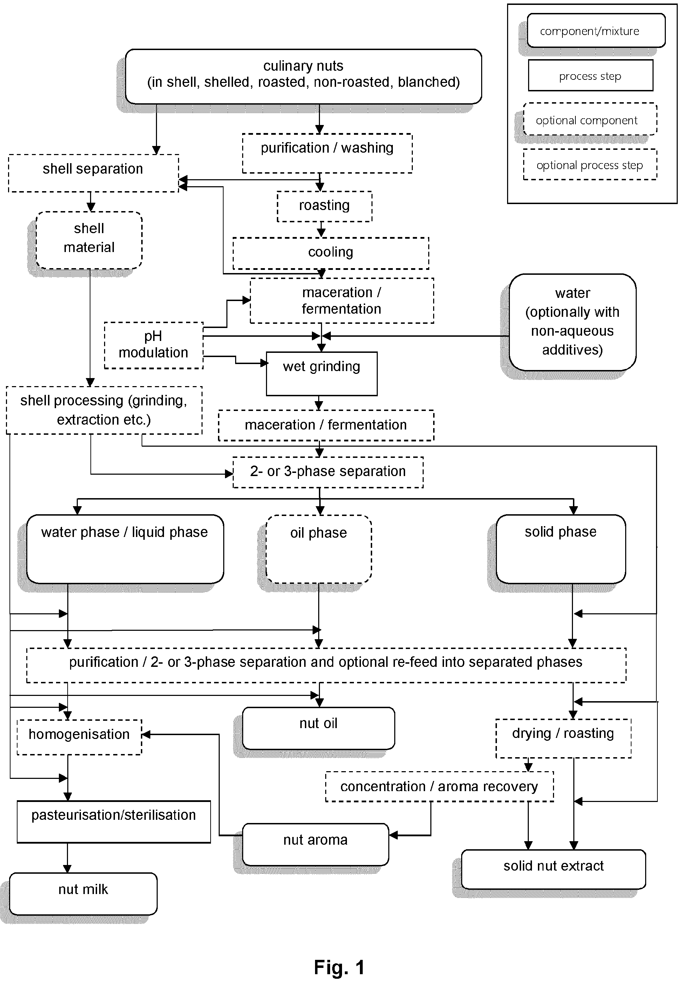

An exemplary embodiment of the above-defined method is illustrated in Fig. 1.

The term "culinary nut", as used herein, includes any tree nut, peanut or drupe seed, including any species of any genus of nuts, peanuts, or drupe seeds, and any mixtures thereof. A single varietal or species may be used, or any conceivable mixtures of tree nuts, peanuts and drupe seeds. As examples of nuts, almonds, pecans, walnuts, cashews, pistachios, peanuts, kola nuts, palm nuts, hazelnuts, filberts, Brazil nuts, macadamia nuts, chestnuts, and mixtures thereof may be mentioned. In particularly preferred embodiments, the term "culinary nut" comprises hazelnuts, almonds, walnuts, cashews, pistachios, pecans, macadamia nuts, peanuts, and combinations thereof. Before being subjected to step a), the culinary nuts may be pre-processed by sterilisation, blanching, shocking, washing and combinations thereof. In some countries, use the term "milk" in conjunction with non-dairy beverages may be prohibited. In this respect, it is understood that the term "culinary nut milk", as used herein, is equivalent to a beverage or drink based on culinary nuts. Further additives may be incorporated into the aqueous suspension before or during step b). While not being limited thereto, exemplary additives may include coffee beans (green, roasted, fermented or non-fermented), coffee cherry pulp, cocoa beans, cocoa pulp, cocoa fruit components, bio-active ingredients, salt, sugars or other sweeteners (including maple syrup, honey, sucrose, fructose, glucose syrup, invert sugar, fruit sugar, corn syrup, sucralose, acesulfame potassium, aspartame, saccharin, cyclamates, acesulfame-K, thaumatin, chalcone, cyclamate, stevioside, stevia, sorbitol, xylitol and lactitoletc.), flavours, essential oils, vitamins, minerals, fruit juice(s) and/or fruit pieces, herbs and/or spices (including without limitation cinnamon, ginger, coriander, cumin, turmeric, chilli, pepper, cardamom, cloves, nutmeg, etc.), preservatives, colourants, thickeners, stabilizers, emulsifiers and combinations thereof, for example.

In general, different stages of maturity of the nuts, harvest times and thus water contents of the culinary nuts should be taken into account before subjecting them to the process of the invention.

During any drying process, the native, bioactive state of various molecules such as proteins, polysaccharides, polyphenols and vitamins tend to be destroyed. Accordingly, in order to extract these substances in a fresh state (i.e. before denaturation), it is preferable that the culinary nuts are not pre-dried before being preparing the suspension in step a). The term "pre-drying", as used herein, primarily denotes an active treatment (e.g., heating above room temperature) resulting in the reduction of water content. However, in further preferred embodiments, "pre-drying" may also encompass inactive steps, such as storage and/or preservation at ambient temperature or lower, during which plants lose their fresh and original aroma. The time between the harvest of the culinary nuts and the processing should therefore ideally be kept as short as possible.

In preferred embodiments, the culinary nuts (kernels with or without shell, husk material, involucre and/or leaves) may be subjected to step a) in a green state to make use of the favourably high antioxidant content when compared to the ripened culinary nut. In this context, "green state" denotes a state before ripeness, which may be determined by the skilled artisan by methods known in the art (based on appearance, consistency, and/or water content, for example) in dependence of the individual type of culinary nut.

In preferred embodiments, the culinary nuts subjected to wet grinding in step b) may include or consist of non-shelled culinary nuts in order to optimize the yield of antioxidants in the resultant extracts. Surprisingly, it has been also found that processing the culinary nut with shell material (by using non-shelled nuts in step a), by separation of the shell material, independent processing and subsequent re-introduction of processed shell material, or by introduction of culinary nut shell material from a different batch, cultivar or culinary nut species) results in a culinary nut milk with improved stability and cloudiness when compared to emulsions obtained by processing shelled nuts. In addition, it has been found that upon filling or bottling, the thus produced culinary nut milk tends to undergo a favourable flavor development when being exposed to air (i.e. after opening). In some embodiments, the culinary nuts may also be processed together with husk material, involucre and/or leaves, e.g. to extract additional biologically active components. In these cases, the method of the present invention preferably further comprises a step of washing the non-shelled culinary nuts before step a), e.g. to remove residues of pesticides, fertilizers or other undesired foreign substances. The washing step may be carried out in a batch or continuous process according to methods known in the art. The processing of in-shell culinary nuts eliminates the need for specialized equipment and processing steps required for shell and separation. However, it does not only offer significant advantages over conventional methods in terms of processing efficiency and energy expenditure, but also makes ideal use of the beneficial bio-active components (e.g. antioxidants) found in the skin and the shell of the culinary nuts.

In an alternatively preferred embodiment, shell material may be separated from the culinary nuts subjected before step b), preferably before step a), and the shell material may be separately and independently processed and subsequently recombined with the suspension before step c) or with at least one of the liquid phase or the solid phase after step c). This embodiment reduces wear of milling equipment during the wet grinding operations in step b), while still enabling effective use of shell material (e.g. as a cloud stabilizing agent, or as filler material due to typically high contents of lignin and cellulose) and its extracted components (i.e. bioactive agents). The independent processing of shell material may include, but is not limited to, grinding (wet or dry grinding), pressing, extraction (e.g. solvent extraction, supercritical fluid extraction, pressurized liquid extraction, ultrasound extraction, enzyme-assisted extraction, microwave-assisted extraction, and microwave- and ultrasonic sound-assisted extraction, for example) and combinations thereof. Preferably, the shell material is at least ground in one or more steps before being reintroduced. It is understood that the processed shell material to be recombined with the suspension before step c) or with at least one of the liquid phase or the solid phase after step c) includes any of the ground shell material, its extracts, or a combination thereof. As is illustrated in Fig. 1, the processed shell material may be reintroduced to the suspension before the phase separation. Alternatively, or in combination, the processed shell material may be introduced to any of the liquid phase, the water phase, the oil phase and/or the solid phase at any step after phase separation, which includes the addition to the nut milk, nut aroma, nut oil and/or solid nut extracts (not explicitly shown in Fig. 1).

It will be understood that shell material from a different batch, cultivar and/or a different culinary nut species may be introduced in addition or in alternative to the aforementioned preferred embodiment to make use of the nutritionally beneficient components and to improve stability and cloudiness of the resulting emulsion, provided that the shell material is selected from shell material from almonds, pecans, walnuts, cashews, pistachios, peanuts, kola nuts, palm nuts, hazelnuts, filberts, Brazil nuts, macadamia nuts, chestnuts, and mixtures thereof. Accordingly, in another preferred embodiment, the method comprises the addition of culinary nut shell material selected from shell material from almonds, pecans, walnuts, cashews, pistachios, peanuts, kola nuts, palm nuts, hazelnuts, filberts, Brazil nuts, macadamia nuts, chestnuts, and mixtures thereof (which may originate from a different batch, cultivar and/or a different culinary nut species) to the suspension at any time before step c) or to at least one of the liquid phase or the solid phase after step c). The culinary nut shell material may be suitably pre-processed according to the aforementioned independent processing steps prior to the addition to the suspension, liquid phase or solid phase. According to the present invention, the independently pre-processed culinary nut shell material has been wet- or dry-ground to an average particle size of less than 100 µm measured as volume moment mean (D[4,3]) by laser photometry, preferably less than 90 µm, even more preferably 80 µm or less, such as from 0.5 to 50 µm or from 1 to 20 µm, in one or multiple steps before being added to the suspension at any time before step c) or to at least one of the liquid phase or the solid phase after step c). In general, the content of culinary nut shell material based on the content of total solids subjected to step a) or b), or the amount of (optionally pre-processed) culinary nut shell material added to at least one of the liquid phase or the solid phase after step c) is not particularly limited. In preferred embodiments, the content of culinary nut shell material based on the content of total solids subjected to step a) or b) or added to the solid phase after step c) amounts to at least 0.1 wt.-%, further preferably at least 0.5 wt.-% and especially preferably at least 1 wt.-% based on the total weight of solids. The upper limit is not specifically limited and may be suitably selected depending on the nut species, but will typically amount to 60 wt.-% or less, further preferably to 50 wt.-% or less, especially preferably to 45 wt.-% or less. In case of addition to the liquid phase after step c), culinary nut shell material is preferably added in an amount of 0.01 wt.-% to 10 wt.-% relative to the total weight of the liquid phase.

In step a), water is added to form a suspension. While not being particularly limited, the weight ratio of water to the culinary nuts in the formed suspension is preferably between 1:1 to 15:1, more preferably 2:1 to 12:1, especially preferably between 2.5:1 to 10:1, which may advantageously affect the processability in the further steps (e.g. facilitated pumping, grinding and/or easier phase separation). For the preparation of a non-dairy milk, the amount of water may be further fine-tuned in dependence of the fat content of the starting material and the desired fat content in the resulting milk.

While it may be preferred to use water (e.g. tap water) in step a), alternative water-containing liquids may also be used as a source of water in order to introduce additional flavors, which may favorably interact with the primary and secondary flavors of the culinary nuts at subsequent stages of the processing methods. Such liquids may include liquids having water contents of from 60 to about 95 % by weight, such as fruit juices, fruit juice concentrates, or milk, for example. In case such water-containing liquids are used, it is generally preferable that the water content in the formed suspension falls into the above-defined ratios. In general, it is preferred that the added water or water-containing liquid has a temperature of 40°C or less, more preferably 30°C or less, and particularly preferably 25°C or less. However, for specific purposes, higher temperatures may be employed as desired. For instance, in order to effect enzyme deactivation, water or water-containing liquids having temperatures of up to 95°C, typically up to 90°C may be desirably used.

When improved extraction yields of lipophilic substances are targeted and/or the introduction of flavors is desired, further extraction agents may be added in addition to water. Such extraction agents may include one or more organic solvents, which may be preferably selected from the group of C₁-C₈ alcohols, C₂-C₈ ketones, C₃-C₇ esters, C₂-C₈ ethers, C₄-C₁₀ lactates, halogenated C₁-C₆ hydrocarbons and C₁-C₈ alkanes, more preferably from C₁-C₈ alcohols, C₁-C₈ alkanes, C₂-C₈ ethers, further preferably from the group of methanol, ethanol, isopropanol, acetone, methyl acetates, ethyl acetates, diethylether, methyl t-butyl ether and hexane, and especially preferably from ethanol, hexane and methyl t-butyl ether. In a particularly preferred embodiment, the organic solvent is ethanol. While not being limited thereto, further examples of additional extraction agents may comprise animal oil (e.g. fish oil), liquid dairy product, vegetable oil (e.g., olive, soybean, rapeseed, canola, sunflower, safflower, peanut, cottonseed, coconut, palm, avocado and rice bran oil) and combinations thereof, which may be infused with further flavors (e.g. cocoa, vanilla, curcuma, chili, cardamom, pepper or the like). When mixed with the water or water-containing liquid, it is preferred that said additional extraction agent is comprised at less than 90% by volume relative to the volume of water or water-containing liquid, preferably less than 70% by volume. The temperature of the extraction agent is not particularly limited and may be suitably adjusted by the skilled artisan.

In embodiments, it may be preferable to modify the pH value of the water or water-containing liquid, for example by addition of one or more acids (e.g. acetic acid, citric acid, or the like) or buffers, preferably during or after step (1). Typically, said pH modulation may involve addition of buffer solution, base or acid in order to fine-tune the subsequent extraction profile.

In addition, carbohydrates may be added to the water or water-containing liquid, which may promote the efficient separation of the oil phase in the subsequent steps. While not being limited thereto, examples of suitable carbohydrates are mentioned in US 2018/0079991 A1. Forming the aqueous suspension in step a), i.e. before step b) has the advantage that solid material is softened prior to grinding and the cooling effect of water further minimizes the mechanical burden on milling equipment. In addition, no drying step is required before wet grinding, which may be especially advantageous in view of the relatively low energy expenditure. The methods and devices used for wet grinding in step b) are not particularly limited as long as significant frictional heat production or high mechanical forces are avoided in order to preserve the heat-sensitive components of the culinary nuts. For this purpose, step b) preferably comprises: (b1) one or more coarse grinding step(s) to an average particle size of 500 µm or less, and (b2) a subsequent fine grinding step to an average particle size of less than 100 µm, preferably less than 90 µm, even more preferably 80 µm or less, such as from 0.5 to 50 µm or from 1 to 20 µm. Reducing the particles to the above size ranges substantially increases the exposed surface area of the particle material for optimized wetting, which enables improved extraction results (such as improved extraction of fats or lipids, aromatic substances, and/or polyphenols). The particle size reduction may be accomplished by using disc mills (e.g. perforated disc mill), colloid mills (e.g. toothed colloid mills), ball mills or corundum stone mills, for example. In a particularly preferred embodiment, the one or more coarse grinding step(s) (b1) are performed with a perforated disc mill, and the fine grinding step (b2) is performed by use of a toothed colloid mill and/or a ball mill. The average particle size is measured as volume moment mean (D[4,3]), and typically defined by all particle sizes contributing according to their volume fraction in the collective, so that the average particle size in the interval is weighted with the corresponding volume portion and all these weighted values are averaged arithmetically. The particle sizes and their distribution are determined by laser photometry.

In preferred embodiments, the method of the present invention comprises a step of subjecting the suspension to a maceration and/or fermentation step, preferably before or directly after step c), further preferably during or after wet-grinding in step b). Advantageously, such processes may be performed to reduce excessive contents of undesirable components of the culinary nuts, such as phytic acid, for example. Maceration enables the aqueous extraction agent to additionally wet the solid material through enlargement of the surface area. In a preferred embodiment, maceration may be performed enzymatically.

In addition, it has been found that maceration plays an important role in improving the yield of nutritionally beneficial components (especially aroma compounds). For this purpose, the culinary nut material (kernels with or without shell, husk material, involucre and/or leaves) may be left to macerate in an aqueous medium, either in an non-ground state before step b) or in a ground state after step b). If desired, the aqueous maceration medium may be pH-modulated by addition of acid, base or buffers to a desired pH. The duration of the maceration process is not particularly limited, but a duration of from 1 to 20 hours is preferred, and a duration of 2 to 12 hours is especially preferable. The processing of macerated culinary nuts generally results in improved aromatic yield. In further preferred embodiments, maceration in an aqueous medium is combined with a subsequent extraction according to steps a) and c), wherein one or more organic solvent(s) according to the above description is(are) added to the aqueous extraction medium. In this respect, it has been surprisingly found that the yield improvement is remarkably higher upon macerating the culinary nut material, separating the macerated culinary nut material from the maceration medium and subjecting the same to extraction (i.e. in steps a) to c)), when compared to direct extraction with organic solvent, despite of the use of the same substrate material and the removal of the maceration medium.

Fermentation may be performed by using microbial starter cultures, including indigenous and non-indigenous bacterial and yeast species known in the art, optionally in combination with enzymatic treatment, while the end point of fermentation may be monitored by chemical measurement of pH, which enables favorable control over the fermentation process when compared to natural, spontaneous fermentation. In addition or alternatively, the fermentation process may be controlled by monitoring temperature, pressure, gas development (e.g. CO₂) and/or the density.

It will be understood that the wording "fermentation", as used herein, may encompass spontaneous or controlled (non-spontaneous) fermentation processes. For example, an incubation step in an incubation medium may be implemented to simulate microbial (i.e. yeast and bacterial) fermentation. Although not being particularly limited as long as the concentration of incubation medium is sufficiently high to prevent spontaneous fermentation by endogenous microbes, the concentration of ethanol in the incubation medium may be from 1 to 20 vol.-%, preferably between 1 and 12 vol.-%. In an especially preferred embodiment from the viewpoint of germination inhibition efficiency and processing costs, the concentration of ethanol in the incubation medium is at least 2 vol.-% and less than 7 vol.-%. The incubation medium may further comprise enzymes known in the art for controlled enzyme-catalyzed reactions in order to facilitate formation of aroma precursors, such as hydrophilic oligopeptides and hydrophobic free amino acids, for example. If applied, the incubation may be carried out in a single step or in multiple incubation steps, wherein different incubation conditions and/or incubation media are employed. As will be known to the skilled artisan, the incubation conditions, such as pH or temperature, may be varied within one single incubation step. The incubation step may further encompass one or more mechanical and/or physical treatment steps commonly known in the art before or during the incubation. Although not being limited thereto, such a mechanical treatment may comprise stirring, mixing and agitating, and combinations thereof, while said physical treatment may comprise an infrared treatment and/or a vacuum treatment, for example.

In step c), the finely ground suspension is subjected to one or more separation and/or processing steps comprising at least the separation into a solid phase comprising culinary nut solids and a liquid phase comprising culinary nut milk. It has been surprisingly found that when the suspension is finely wet ground according to step b), the following separation of the solid phase does not negatively impact the aromatic richness of the culinary nut milk. In addition, since sedimentation of solid particles is avoided, the appearance and mouthfeel of the culinary nut milk may be substantially improved. Accordingly, compared to methods known in the art which do not employ separation of solids from the liquid phase, the method of the present invention provides a solid phase which may be advantageously used for a number of products and extracts (examples of which will be mentioned below) without compromising the rich aroma of the culinary nut milk. In fact, the resulting culinary nut milk exhibits improved appearance and organoleptic properties.

Preferably, devices employing centrifugal forces may be utilized to achieve mechanical particle separations, such as decanters or nozzle separators, while decanters are particularly preferred.

For some applications, it may be preferred that step c) comprises a three-phase separation, wherein the suspension is separated into a solid phase comprising culinary nut solids, a water phase (heavy phase) comprising culinary nut milk, and a fat phase (light phase) comprising culinary nut oil. For example, such a process is desirable if gentle extraction of nut oils (without the necessity of carbohydrate addition or pressing steps) is desired and/or if it is desired to minimize the fat content in the culinary nut milk without compromising the flavor richness (as would be the case by dilution, for example). Although a three-phase separation may be achieved by subsequent steps, for instance, by de-oiling the liquid phase obtained in step c) to produce culinary nut milk, it is preferred to conduct three-phase separation in a single step, e.g. by a three-phase decanter.

A three-phase separation further offers the possibility of removing undesirable lipophilic components via the oil phase. Examples of such undesirable components include, but are not limited to lipophilic allergens or toxic substances. For instance, cashew nut shells include cashew shell oil (also known as cashew nutshell liquid (CNSL)), which is undesirable in food preparation as it exhibits strongly allergenic properties and causes eye irritation, skin rashes, and burning sensations upon contact with human skin. Separation of cashew shell oil through the oil phase provides a pathway to edible cashew fruit extracts, while the shell oil itself may be further processed to provide a raw material in the preparation of drugs, antioxidants, fungicides, and biomaterials, for example.

Multiple phase separation and recombination steps may be employed to achieve an improved separation between the liquid phase(s) and the solid phase. The thus obtained purified phases may be re-fed to the respective phases obtained after the first separation stage.

For example, the water and oil phases obtained in the three-phase separation may be further purified, e.g. by performing a second three-phase separation step, in order to further improve the recovery and yield of extracts. The solid phase may filtered or centrifuged to separate remaining water, which may be recombined with the water phase from the initial decanting step or at a later processing stage of said phases. Also, the water phase may be subjected to further purification steps, e.g. by filtration using vacuum rotation filters in order to remove fine particles.

In a preferred embodiment, steps a) to c) are carried out continuously in a time frame of less than 100 minutes, preferably less than 60 minutes, more preferably less than 20 minutes, which represents a remarkable improvement over conventional techniques.

Although a heat treatment may be incorporated at several stages of the processing method, it is preferred that each of the processing steps a) to c) are performed at temperatures in the range of 0°C to 65°C in order to preserve high contents of heat-sensitive materials. For instance, for the preparation of nut oils with especially high contents of nutritionally beneficial bioactive materials (such as heat-sensitive polyphenols, flavonoids or vitamins), it is however, preferred that the culinary nuts are not roasted before step a) and that the suspension temperature during step c) does not exceed 40°C, and is preferably less than 35°C, more preferably less than 30°C, and especially preferably 25°C or less, such as 20°C or less.

In a preferred embodiment, the method may also comprise a step of subjecting the suspension during or after step b) to a heat treatment at a temperature of 60°C or less (e.g. at a temperature of 40 to 60°C) in order to further enhance the extraction efficiency in the subsequent steps.

A heating step may also be implemented to introduce roast flavors. For example, the culinary nuts may be roasted before mixing with water in step a), which may advantageously also be performed with culinary nuts in shell. While not being limited thereto, typical roasting temperatures will be generally in the range of more than 65°C and 200 °C or less, preferably between 70 and 160°C, such as from 80 to 150°C.

If it is desired to introduce roast flavors into the solid phase comprising culinary nut solids obtained after step c) without effect on the liquid phase, the solid phase after step c) may be roasted alone, preferably during a drying procedure. In a preferred embodiment, salt (e.g., sodium chloride) may be added in order to enhance the solubility of proteinogenic substances as precursors for the Maillard reactions.

For example, (wet) solid phase obtained after phase separation in step c) may be optionally treated with a heatable roll grinder to reduce particle size and begin pre-drying. The solid phase may be subjected to a drying step and an optional subsequent roasting step to obtain (roasted) culinary nut powder and culinary nut aroma. Also, sugar, sugar solution and/or fruit juices or the like may optionally be added to separated solids before drying to improve flavor development during the drying/roasting process. It will be understood that the obtained culinary nut aroma may be collected and used independently (as aroma extract) or directly reintroduced into the other extracts, including the liquid/water phase comprising culinary nut milk for a more intense taste.

The method of carrying out the drying/roasting is not particularly limited and may e.g. be accomplished in a drum dryer. In a preferred embodiment, however, the drying/roasting step is carried out in a mixing device comprising a cylindrical, tubular body arranged with its axis horizontal and closed at its opposite ends by end plates, and having a coaxial heating or cooling jacket through which, for example, diathermic oil or another fluid is intended to flow to keep the internal wall of the body at a predetermined temperature. The tubular body has an inlet and outlet openings for the solid phase. The outlet opening communicates, by means of a duct, with a device for separating the aroma phase from the dried product. The device further comprises a bladed rotor is supported for rotation in the tubular body, its blades being arranged as a helix and oriented for centrifuging the solid phase being processed and simultaneously transporting it towards the outlet opening. Using this mixing device advantageously allows the drying/roasting step and the separation of the roasted flavors and other aromatics to be carried out continuously up to the preparation of the culinary nut powder. The temperature in the optional roasting step is not particularly limited and may be suitably selected by the skilled artisan in dependence of the selected culinary nuts and the desired flavors and/or antioxidant activity in the final product, for example. Typically, the roasting step is followed by a cooling step, which may be carried out by air cooling or by addition of cold liquid (e. g. water), for example. If roasting is performed before a maceration or fermentation step, the cooling step may be preferably carried out with the use of a cold liquid which is adapted to adjust the pH, enzymatic and/or microbial content to conditions optimized for maceration or fermentation, respectively, which advantageously reduces the number of necessary process steps.

The above-described methods enable simple, rapid and inexpensive preparation of culinary nut extracts, which make ideal use of the naturally present, nutritionally beneficial components.

### Processing of Culinary Nut Extracts and Related Products

The culinary nut extracts obtained by the above-described methods may be directly employed as food products (as food additives, nutritional supplements or beverages, for example). In addition, culinary nut oil extracts may also be used in cosmetic products (e.g. in lotions), health-care products (including natural health-care products), and combinations of the latter (topical preparations, etc.).

Specifically, a second embodiment of the present invention relates to a culinary nut milk produced by optionally homogenising and subsequently pasteurising or sterilising the liquid phase (in case of a two-phase separation) or the water phase (in case of a three phase separation) obtained by the method according to the first embodiment; wherein the culinary nut shell material is added to the suspension in steps a) or b), and the content of culinary nut shell material based on the content of total solids subjected to step a) or b) amounts to at least 0.1 wt.-% based on the total weight of solids, or wherein culinary nut shell material is added to the liquid phase after step c) in an amount of 0.01 wt.-% to 10 wt.-% relative to the total weight of the liquid phase; and wherein the method further comprises a step of sterilising the liquid phase, or a step of pasteurising or sterilising the water phase, respectively, to provide culinary nut milk.

For the preparation of culinary nut milk, the liquid phase or water phase (in case of a three-phase separation) may be optionally homogenised and is subsequently pasteurised or sterilised to provide a ready-to-serve culinary nut milk with favorable appearance and high contents of preserved natural flavors, vitamins and antioxidants.

During homogenisation, the dimension of the fat droplets is reduced, which increases the perception of creaminess and the product stability by decreasing the rate of fat agglomeration. Homogenisation may be brought about by methods known in the art, and typically includes forcing the heated pasteurized mass through an orifice under high pressure, typically between 120 and 2100 bar. Ultra high pressure (UHP) homogenisation with pressures of between 1400 and 2100 bar is preferable as it enables the provision of emulsions with a large number of very small fat droplets (diameters of less than 0.5 µm) and requires lower fat content to achieve the sensory and stability properties compared a product homogenized at lower pressures.

A pasteurisation or sterilisation step may be carried out according to methods known in the art to prevent microorganism spoilage/propagation, e.g. by application of heat, irradiation, chemical sterilisation, and micro-, ultra- or nanofiltration, for example. The pasteurisation process may be carried out in batch or continuous operation, e.g. by the use of HTST (high temperature short time) heat exchangers.

A third embodiment of the present invention relates to edible culinary nut-based products comprising the culinary nut milk according to the second embodiment or the solid phase obtained by the method according to the first embodiment described above; wherein the culinary nut shell material is added to the suspension in steps a) or b), and wherein the content of culinary nut shell material based on the content of total solids subjected to step a) or b) amounts to at least 0.1 wt.-% based on the total weight of solids; or wherein the culinary nut shell material is added to the solid phase after step c) in an amount of at least 0.1 wt.-% based on the total weight of solids.

For instance, the (optionally dried) solid phase may be used as a culinary nut extract for further processing into numerous food products (including, but not limited to candy, protein bars, confectionery applications, bakery applications, instant powders, for use in cereals, as spread or ice creams) or pressed into shapes with different texture (including a recomposition of the culinary nut shape, for example). Moreover, the solid phase may be processed into a (gluten-free) flour for bakery applications (sweet or salty pastry and bread baking). Further processing steps may include, but are not limited to, pasteurisation, sterilisation, extrusion, instantisation, or the like.

Using seeds (e.g. rice or beans) or legumes (e.g. soybeans) as additional starting materials offers the possibility to employ the (optionally dried) solid phase as a base material for meat replacement products (including tofu or similar products), which may be processed and/or flavored according to methods and recipes known in the art.

For certain applications, such as the preparation of culinary nut-based ice creams, the wet solid phase may be processed without drying. For example, the wet solid phase may be directly added to a mixture comprising a natural or artificial sweetener, and subjected to pasteurisation, homogenisation and freezing to obtain a culinary nut-based frozen dessert. To this mixture, one or more dairy milk products (comprising milk fat, milk solids non-fat (MSNF) and/or yoghurt), vegetable milk products (including the culinary nut milk obtained from the liquid phase according to the present invention), egg products (e.g. egg yolk) emulsifiers and stabilizers may also be optionally added in suitable amounts to prepare a variety of nut-flavored hard frozen ice cream products, low-fat ice cream products, light ice cream products, soft-frozen ice cream products, sherbets, sorbets, and frozen yoghurts.

Examples of the third embodiment also include various non-dairy products, such as non-dairy instant milk powders, non-dairy yoghurts or non-dairy cheese, produced by further processing of the culinary nut milk according to the second embodiment of the present invention.

An instant non-dairy milk powder may be obtained by instantising the culinary nut milk by methods known in the art, examples of which include, but are not limited to agglomeration techniques such as steam agglomeration, fluidized bed agglomeration, freeze drying agglomeration, thermal agglomeration or spray drying, for example.

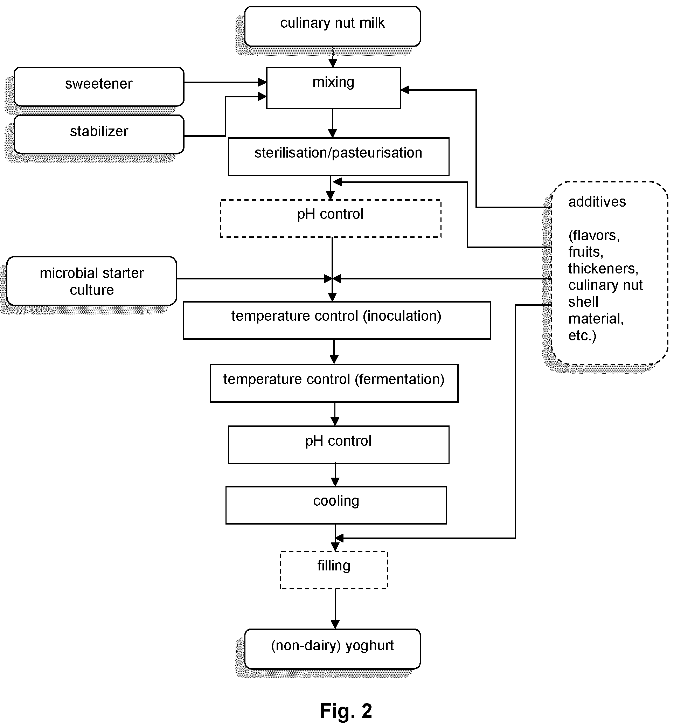

An exemplary method for the preparation of non-dairy yoghurt is illustrated in Fig. 2 and may include the steps of: mixing of a sweetener (e.g. sugar) and stabilizer in water; adding the above-described culinary nut milk to the mixture; pasteurising the mixture including the culinary nut milk at elevated temperatures; adding a suitable bacterial culture to the pasteurized mixture at inoculating temperature (e.g., in a range of 42 to 44°C); controlling the fermentation process by adjusting the temperature conditions (e.g. to a range of 42 to 45°C), monitoring the pH of the mixture and cooling the mixture when a target pH (e.g. in the range of from 4.2 to 4.7) has been reached to stop fermentation. The thus obtained yoghurt may then be optionally further cooled (e.g. to temperatures of 3 to 7 °C), flavored and filled. Additives such as fruits, thickeners, colorants, natural and/or artificial flavors, herbs, spices, preservatives, tricalcium phosphate, live active cultures, and proteins (e.g. plant-based), or the like, may be added to the mixture at different stages of the process or preferably to the yoghurt.

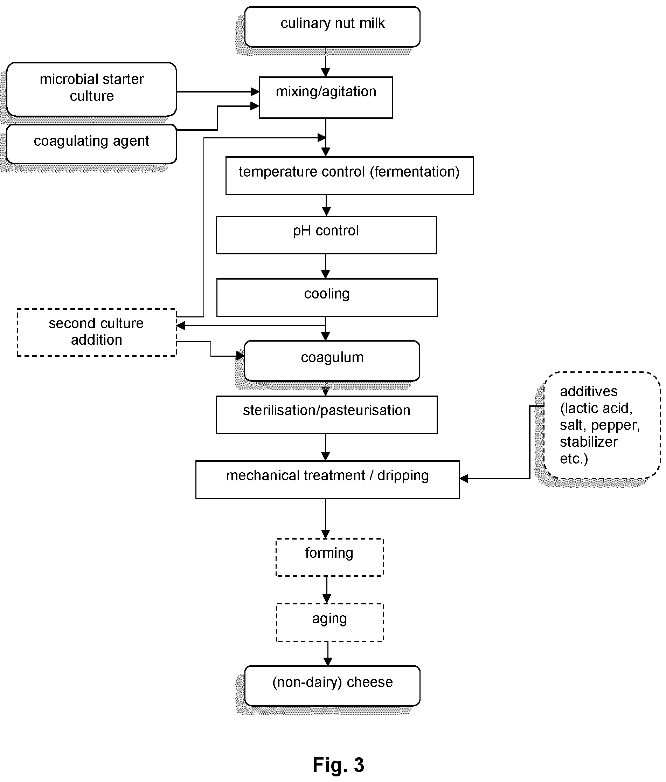

Fig. 3 schematically illustrates an exemplary method for producing a non-dairy cheese. The process generally starts with mixing of one or more bacterial cultures and a coagulating agent with culinary nut milk and gentle agitation of the mixture (preferably at a temperature of 15 to 20°C). The then initiated fermentation process is controlled by adjusting the temperature conditions (e.g. to a range of 42 to 45°C), monitoring the pH of the mixture and cooling the mixture (e.g., to about 20 to 25°C) when a target pH (e.g. in the range of from 4.2 to 4.7) has been reached to stop fermentation. The thus produced coagulum can be pasteurized and cooled (e.g., to about 20 to 25°C), if necessary, and may be optionally repopulated with one or more cultures. The resulting curd can be subjected to mechanical processing steps known in the art, including pressing, dripping methods (e.g., by placing the curd into a draining bag), mixing, chopping, or the like, in order to achieve the desired viscosity, density and smoothness. During this process, water and additives, such as lactic acid, salt, pepper, stabilizer, for example, may be added. Subsequently, the cheese may be aged to the desired ripeness according to methods known in the art. As with the preparation of the non-dairy yoghurt, suitable bacterial cultures may be appropriately selected by the skilled artisan.

A fourth embodiment of the present invention relates to a culinary nut oil, which is obtained according to a method of the first embodiment, wherein the culinary nut shell material is added to the suspension in steps a) or b), and wherein the content of culinary nut shell material based on the content of total solids subjected to step a) or b) amounts to at least 0.1 wt.-% based on the total weight of solids; and wherein the method further comprises the preparation of a culinary nut oil by separating the suspension in step c) into a solid phase comprising culinary nut solids, a water phase (heavy phase) comprising culinary nut milk, and a fat phase (light phase) comprising the culinary nut oil. The oil phase may be optionally further purified and concentrated to provide a culinary nut oil with high contents of nutritionally beneficial lipophilic components. Alternatively, the nut oil extract may be used for non-food applications, such as the preparation cosmetic products, health-care products, drugs, antioxidants, and microbicides, for example.

It will be appreciated that the methods of the present invention may employ any of the preferred features specified above with respect to the description of the first to fourth embodiments, and that the preferred features may be combined in any combination, except for combinations where at least some of the features are mutually exclusive.

### EXAMPLES

Three types of hazelnut milk have been prepared according to the method of the present invention, by mixing hazelnuts with demineralized and sterile filtrated water in a weight ratio of 1:3 (i.e. 25 kg hazelnuts and 75 kg water), coarse-grinding the aqueous suspension in a perforated disc mill (FrymaKoruma ML 150) and fine-grinding the coarse slurry with a toothed colloid mill (FrymaKoruma MZ 130; milling gap 0.1 mm). Upon fine grinding, the suspension was subjected to a phase separation with a decanter centrifuge (GEA Westfalia). The water phase obtained from phase separation was subjected to sterilisation at 120°C for 55 seconds using a tubular heat exchanger. In each case, the total extraction time from the mixing step a) to the preparation of the sterilized hazelnut milk was approximately 10 minutes or less. The solid phase obtained in the phase separation step has been dried at 65°C at a reduced pressure of 30 mbar for approximately 8 hours. In Example 1, washed whole hazelnuts (i.e. in shell) have been used as starting material, resulting in 43 kg of hazelnut milk. Example 2 has been performed by use of washed non-blanched hazelnut kernels, while blanched hazelnut kernels have been used as starting material in Example 3. In both Examples 2 and 3, the process yielded 74 kg of hazelnut milk.

The taste of the hazelnut milk obtained in Examples 1 and 3 was evaluated and an aromatically rich and pleasant taste was attributed to each of the samples.

The starting materials and the obtained nut milk and dried solid extracts have been analyzed with respect to the dry matter content, fat content and pH. The results of the analysis are shown in Table 1 below.

**TABLE 1**

| | | Dry matter content [%] | Fat content [%] | Fat content per dry matter [%] | pH |
|---|---|---|---|---|---|
| Example 1 | Whole hazelnuts | 90.70 | 32.72 | 36.07 | - |
| | Hazelnut milk | 5.00 | 2.63 | 52.60 | 6.52 |
| | Dried solids | 98.65 | 39.10 | 39.64 | - |
| Example 2 | Hazelnut kernels (non-blanched) | 94.70 | 54.85 | 57.92 | - |
| | Hazelnut milk | 19.40 | 6.08 | 31.34 | 6.48 |
| | Dried solids | 98.85 | 45.04 | 45.56 | - |
| Example 3 | Hazelnut kernels (blanched) | 94.85 | 54.85 | 57.83 | - |
| | Hazelnut milk | 25.26 | 7.27 | 28.78 | 6.51 |
| | Dried solids | 98.26 | 39.02 | 39.71 | - |

The above analysis indicates that, after two phase separation, the majority of the fat content remains in the solid phase, while the extraction efficiency is similar in all examples. The fat content of the milk obtained in Example 1 indicates that in case of whole hazelnuts, a nut to water ratio of 1:3 is suitable to achieve fat contents similar to conventional dairy milk.

In view of the above, it is shown that the present invention provides a simple and particularly rapid and cost-efficient process for the preparation of culinary nut extracts.

In a further series of experiments, chemical compositions of the plant-based milk products produced by the method of the present invention were studied in order to gain insights of nutritive and sensorial aspects of the new hazelnut-milk products and to provide a basis for further product optimization.

The test samples have been prepared according to a method of the present invention, by mixing hazelnuts with demineralized and sterile filtrated water in a weight ratio of about 1:5 (i.e. approximately 25 kg raw material and 124 l water), coarse-grinding the aqueous suspension in a perforated disc mill, fine-grinding the coarse slurry with a toothed colloid mill, and subjecting the finely ground suspension to a phase separation with a decanter centrifuge. Upon testing, the hazelnut drink obtained from phase separation was subjected to sterilisation at 100°C for 15 seconds using a tubular heat exchanger, and to packaging. In each case, the total extraction time from the mixing step a) to the preparation of the sterilized hazelnut milk was approximately 10 minutes or less. As raw materials, in-shell hazelnuts (Examples 4 and 5), unroasted hazelnuts with skin (Examples 6 and 7) and roasted hazelnuts without skin (Examples 8 and 9) were used. Hazelnut raw materials from the same origin but different harvesting years have been used in Examples 4, 6 and 8, and Examples 5, 7, and 9, respectively.

The final products (hazelnut milk) and the side-streams (solids after decanter) as well as the different raw materials used for production of the prototypes were investigated for main constituents such as protein, fat, carbohydrates, starch and insoluble dietary fibers. Furthermore, selected minor constituents such as vitamins and aroma-active compounds, as well as the polyphenol content and the antioxidative potential have been analyzed.

For the analysis of the main constituents the following methodologies were applied:

The fat content was determined after direct extraction with the Soxhlett method, as described in Matissek et al., Lebensmittelanalytik, 5th Edition, 2014, Springer Spektrum Verlag, Berlin-Heidelberg.

The total protein content was determined according to ISO 5983-2.

The contents of the saccharides glucose (glu), fructose (fru), and saccharose (suc) have been determined by means of enzymatic assays using Enzytec^{™} Liquid Sucrose / D-Glucose / D-Fructose.

The starch content was determined by means of an enzymatic assay using an UV-method for the determination of native starch and partially hydrolized starch.

The determination of insoluble dietary fibers was performed according the method of Robertson et al., J. Anim. Sci. Suppl. 1977, 45(1), 254.

Determination of selected aroma-active compounds in hazel-nut milk samples: Selected hazelnut aroma compounds 2-ethyl-2-methylbutyrat, hexanal, filberton, nonanal, acetic acid, 2-ethylhexanol, linalool, acetophenone & benzothiazole in the hazelnut-milk samples produced from different hazelnuts raw materials (with/without shell, with/without skin, unroasted/roasted) based on the SPME-method as described by Pastorelli et al., Food Additives & Contaminants 2006, 23(11), 1236-1241. For the sample preparation the nuts were frozen at -20°C and then ground by means of a basic analytical lab mill to 1 part of nut powder 4 part of water were added and dispersed with a Polytron homogenizer for 1 minute. 5 g milk were weighted in 20 ml HS-vials. For calibration of the selected analytes, internal standards (amyl acetate and methyl pelargonate) were added from an ethanolic stock solution to water to a final concentration of 10 mg/l each. The sample was vortexed and analyzed by SPME-GC-MS under the following conditions:
Fiber: Phase: 85 µm Carboxen/PDMS (Supelco #57295-U); Incubation: 10 min. at 40 °C; Extraction: 10 min.

### GC-MS:

System: Thermo Trace GC with TSQ 8000 Evo Mass Spectrometer, TriPlus RSH Autosampler (Thermo Scientific) and Xcalibur system software;
Columns: Analyt. column DB-FFAP 30 m x 0.25 mm, 0.25 µm film (Agilent #122-3232) Restriction: TSP 0.5 m x 0.15 mm, DPTMDS-deact. (BGB #TSP-150375-D-10)
Carrier gas: Helium 6.0 (PanGas)
GC parameters: Injector: PTV with SPME-Liner (BGB #LS2200-5); Injector Temp.: 280 °C Split flow: 10 ml/min; splitless: 0.5 min.; Column flow: 2 ml/min constant; Oven program: 40 °C with 7 K/min at 155 °C, then with 50 K/min at 250 °C, 9 minutes constant.
MS parameters: Source temperature: 220°C; emission current: 50 µA; Detection: MS SIM (Dwell Time > 30 ms); Quantitation: External 4 - level calibration with 2 internal standards via area counts.

Vitamin B3 (Niacin) and Vitamin E (α-Tocopherol) were determined in the raw materials and the final products via HPLC.

The antioxidative capacity and total polyphenol content have been determined in all samples. The total polyphenol content has been determined by the photometric assay using the Folin Ciocalteu Reagens as sum parameter as described Pedan et al., Molecules 2018, 23(1931). The antioxidative capacity of the raw materials and the products has been determined as sum parameter by the DPPH-assay as described by Brand-Williams et al., Use of free radical method to evaluate antioxidant activity, Lebensmittel-Wissenschaft und Technologie, 1995.

Table 2 shows the results of the main constituent analysis of the raw materials used for the production of the hazelnut milk as well as the products, hazelnut milk and the obtained side products are summarized and presented in % of the total weight of the analyzed products. All measurements were done at least in duplicates (n ≥ 2) with a deviation from the mean value < +/-5 %.

Overall, the analyzed hazelnut milk samples showed similar composition concerning the main constituents. Only for the hazelnut milk samples produced from in-shell hazelnuts, slightly lower contents of proteins and saccharides were observed in comparison to the hazelnut milk samples produced of unroasted nuts with skin and roasted nuts without skin.

**TABLE 2**

| | Type | Material | Protein [% m/m] | Fat [% m/m] | Saccharides | | | starch | insoluble dietary fibers [g/100 g] |
|---|---|---|---|---|---|---|---|---|---|
| | | | | | glc [% m/m] | fru [% m/m] | suc [% m/m] | | |
| Example 4 | harvest **A** /in shell | raw material | 9.41 | - | 0.031 | 0.190 | 1.79 | 1.31 g/100 g | 49.7 |
| | | ground suspension | 1.75 | - | 0.004 | 0.039 | 0.417 | - | - |
| | | solids after separation | 7.95 | 16.6 | 0.002 | 0.035 | 0.283 | - | - |
| | | milk after separation | 1.28 | <1 | <0.001 | 0.032 | 0.427 | 1.08 g/l | 0.34 |
| | | packaged milk | 0.9 | 5.53 | <0.001 | 0.026 | 0.394 | - | - |
| Example 5 | harvest B /in shell | raw material | 8.75 | - | 0.076 | 0.189 | 1.98 | 1.26 g/100 g | 51.9 |
| | | ground suspension | 1.67 | - | 0.017 | 0.044 | 0.303 | - | - |
| | | solids after separation | 9.18 | 15.4 | 0.045 | 0.080 | 0.095 | - | - |
| | | milk after separation | 1.01 | <1 | 0.015 | 0.053 | 0.374 | 1.06 g/l | 0.09 |
| | | packaged milk | 0.98 | 0.97 | <0.001 | 0.039 | 0.368 | - | - |
| Example 6 | harvest A /unroasted with skin | raw material | 2.61 | 66.0 | 0.513 | 0.648 | 4.45 | 5.89 g/100 g | 7.3 |
| | | ground suspension | 3.21 | 13.0 | 0.499 | 0.378 | 0.948 | - | - |
| | | solids after separation | 4.91 | 53.4 | 0.234 | 0.323 | 0.452 | - | - |
| | | milk after separation | 3.05 | <1 | 0.037 | 0.099 | 0.636 | 0.96 g/l | 0.10 |
| Example 7 | harvest B /unroasted with skin | raw material | 4.41 | 63.2 | 1.23 | 1.15 | 2.83 | 5.94 **g/100** g | 8.1 |
| | | ground suspension | 3.23 | 12.7 | 0.210 | 0.147 | 0.687 | - | - |
| | | solids after separation | 5.38 | 53.6 | 0.137 | 0.215 | 0.278 | - | - |
| | | milk after separation | 2.23 | <1 | 0.009 | 0.026 | 0.653 | 0.82 g/l | 0.06 |
| Example 8 | harvest A /roasted without skin | raw material | 12.67 | 66.3 | 0.097 | 0.313 | 3.29 | 4.29 | 8.0 |
| | | ground suspension | 2.92 | 13.1 | 0.053 | 0.057 | 0.622 | - | - |
| | | solids after separation | 4.86 | 55.0 | 0.037 | 0.207 | 0.109 | - | - |
| | | milk after separation | 3.06 | <1 | 0.003 | 0.011 | 0.730 | 1.00 g/l | 0.28 |
| Example 9 | harvest B /roasted without skin | raw material | 5.39 | 64.7 | 0.043 | 0.264 | 3.14 | 4.32 | 12.7 |
| | | ground suspension | 2.75 | 11.0 | 0.030 | 0.035 | 0.523 | - | - |
| | | solids after separation | 5.37 | 53.5 | 0.076 | 0.191 | 0.231 | - | - |
| | | milk after separation | 3.50 | 13.0 | 0.004 | 0.009 | 0.598 | 1.07 g/l | 0.23 |

For aroma analysis, selected aroma-active compounds were analyzed by means of solid phase micro extraction gas chromatography mass spectrometry (SPME-GC-MS) in different hazelnut milk samples. The results are summarized in Table 3.

**TABLE 3**

| aroma compound | Example 4 | Example 5 | Example 6 | Example 7 | Example 8 | Example 9 |
|---|---|---|---|---|---|---|
| | [mg/l] | | | | | |
| ethyl-2-methyl butyrate | - | - | - | - | 0.009 | 0.013 |
| hexanal | - | - | - | - | 0.070 | 0.050 |
| filbertone | 0.033 | 0.016 | 0.081 | 0.045 | 0.046 | 0.048 |
| nonanal | 0.079 | 0.128 | - | 0.114 | 0.413 | 0.525 |
| acetic acid | 119 | 20.0 | 175 | 16.7 | 235 | 131 |
| 2-ethylhexanol | 6.00 | 2.71 | 5.93 | 2.50 | 20.2 | 16.2 |
| linaool | 0.040 | 0.045 | 0.057 | 0.47 | 0.128 | 0.206 |
| acetophenone | 0.294 | 0.120 | 0.351 | 0.104 | 6.70 | 4.12 |
| benzothiazole | 0.104 | 0.040 | 0.170 | 0.046 | 1.03 | 0.649 |
| 4-cresol | - | - | - | - | 0.649 | 0.290 |

For the aroma-active compounds, higher contents of the compounds nonanal, linalool, 2-ethylhexanol and acetophenone could be observed in the hazelnut-milk produced out of roasted hazelnuts, indicating a higher aroma intensity of the sample as it is known for hazelnuts after roasting.

Important vitamins of hazelnuts, i.e. niacin (Vitamin B3) and α-tocopherol (Vitamin E), were measured by HPLC in the used raw materials as well as in the final products. The results are summarized in Table 4 (as mean values n > 2, standard deviation ≤ ±10%).

**TABLE 4**

| | | Vitamin B3 | | Vitamin E | | Sum |
|---|---|---|---|---|---|---|
| Example 4 | raw material | 7.12 mg/kg | | 177 mg/kg | | |
| | hazelnut milk | 0.51 mg/l | 28.7 % | 2760 µg/l | 6.2 % | 35% |
| Example 5 | raw material | 6.12 mg/kg | | 109 mg/kg | | |
| | hazelnut milk | 0.50 mg/l | 32.7 % | 4130 µg/l | 15.2 % | 48 % |
| Example 6 | raw material | 15.8 mg/kg | | 278 mg/kg | | |
| | hazelnut milk | 0.14 mg/l | 3.5 % | 5510 µg/l | 7.9 % | 11 % |
| Example 7 | raw material | 14.9 mg/kg | | 297 mg/kg | | |
| | hazelnut milk | 0.26 mg/l | 7.0 % | 5500 µg/l | 7.4 % | 14 % |
| Example 8 | raw material | 15.5 mg/kg | | 376 mg/kg | | |
| | hazelnut milk | 0.41 mg/l | 10.6 % | 4590 µg/l | 4.9 % | 15 % |
| Example 9 | raw material | 12.1 mg/kg | | 347 mg/kg | | |
| | hazelnut milk | 0.39 mg/l | 12.9 % | 4140 µg/l | 4.8 % | 18 % |

The highest transfer rates could be observed for niacin, followed by α-tocopherol from the in-shell hazelnuts into the hazelnut-milk product. Although the concentrations of both vitamins were lower in comparison to the other raw materials, a relatively high percentage of these compounds could be transferred into the final products (hazelnut-milk produced of in-shell nuts). Especially for Niacin the highest concentrations are monitored in hazelnut milk produced of non-shelled nuts.

The results of the antioxidative capacity and the total polyphenol content measurements are listed in Table 5 (as mean values n=3, standard deviation ≤ ±10%).

**TABLE 5**

| | | total polyphenol content (TPC) | antiox-value |
|---|---|---|---|
| | | [mg ECA/100 g] | [mg ECA/100 g] |
| raw material | Example 4 | 54.2 | 789 |
| | Example 5 | 82.0 | 1200 |
| | Example 6 | 65.6 | 676 |
| | Example 7 | 137 | 1910 |
| | Example 8 | 9.1 | 110 |
| | Example 9 | 13.4 | 101 |
| ground suspension | Example 4 | 14.8 | 129 |
| | Example 5 | 10.9 | 134 |
| | Example 6 | 19.4 | 77.1 |
| | Example 7 | 25.5 | 117 |
| | Example 8 | 15.7 | 56.1 |
| | Example 9 | 28.7 | 62.2 |
| solids after separation | Example 4 | 34.2 | 543 |
| | Example 5 | 43.5 | 678 |
| | Example 6 | 46.7 | 690 |
| | Example 7 | 58.1 | 891 |
| | Example 8 | 15.3 | 135 |
| | Example 9 | 15.0 | 97.0 |
| hazelnut milk after separation | Example 4 | 15.3 | 138 |
| | Example 5 | 14.8 | 277 |
| | Example 6 | 94.9 | 94.9 |
| | Example 7 | 20.8 | 131 |
| | Example 8 | 15.2 | 76.4 |
| | Example 9 | 14.8 | 80.8 |
| packaged hazelnut milk | Example 4 | 17.4 | 145 |
| | Example 5 | 20.8 | 163 |

High differences of total polyphenol contents (TPC) were observed for different harvesting years. It could be observed that the roasting procedure significantly reduced the TPC value. For the antioxidative capacity (antiox-value), the values determined for the raw materials showed the same trend as the TPC. A slight TPC increase was observed in the final product after the decanter separation in comparison to the hazelnuts ground in water (ground suspension) before decanter separation. The hazelnut milks produced of hazelnuts with shells showed especially favourable antiox-values. Furthermore, relatively high antiox-values could be observed for the solids after decanter, especially for the unroasted material.

In summary, the evaluation of Examples 4 to 9 shows that similar contents of the main constituents protein, fat, saccharides and polysaccharides (starch and insoluble dietary fibers) have been measured in all the resulting products produced out of the different raw materials (in-shell hazelnuts, unroasted hazelnuts with skin, roasted hazelnuts without skin). In contrast to this, higher amounts of vitamins (Vit. B3, Vit. E) could be observed in the unroasted raw materials (with shell, unroasted with skin) as well as higher values for the TPC and the antioxidant content. Thereby, higher antiox-values are detected for the hazelnut milk produced out of in-shell hazelnuts. Regarding the aroma-active odorants, higher contents of the measured aroma-active compounds are measured in the hazelnut-milk produced based on roasted nuts. Furthermore, it is shown that the hazelnut milk produced out of in-shell hazelnuts exhibits beneficial nutritive properties (antioxidative capacity, content of vitamins) and can be also regarded as more sustainable, due to the fact that the shell is fully used in the production of the plant-based milk alternative. In terms of vitamin and total polyphenol content, the hazelnut milk produced from unroasted hazelnuts with skin likewise shows beneficial nutritive aspects.

In another series of experiments, ten samples of culinary nut drinks have been produced and subjected to sensory analysis based on consensus profiling, in order to analyse the influence of different raw materials and processes on the final product. In Examples 10 to 15, hazelnuts were exlusively used as raw materials. In Examples 16 and 17, vanilla and coffee were added to the hazelnuts prior to extraction, respectively, while in Examples 18 and 19, unroasted but shelled peanuts and almonds were used as sole raw materials. The samples were processed according to the method of the present invention, with the differences being shown in the following Table 6.

**TABLE 6**

| Sample | Raw materials | Shelled/Peeled | Roasted | Extraction temperature | Solids:Water weight ratio |
|---|---|---|---|---|---|
| Example 10 | hazelnut | yes | no | 50-60°C | 1:4 |
| Example 11 | hazelnut | yes | yes | 50-60°C | 1:4 |
| Example 12 | hazelnut | no | yes | 50-60°C | 1:4 |
| Example 13 | hazelnut | no | yes | 50-60°C | 1:3 |
| Example 14 | hazelnut | no | no | 50-60°C | 1:4 |
| Example 15 | hazelnut | no | no | room temperature | 1:5 |
| Example 16 | hazelnut + vanilla | yes | no | 50-60°C | 1:4 |
| Example 17 | hazelnut + coffee | yes | no | 50-60°C | 1:4 |
| Example 18 | peanut | yes | no | 50-60°C | 1:4 |
| Example 19 | almond | yes | no | 50-60°C | 1:4 |

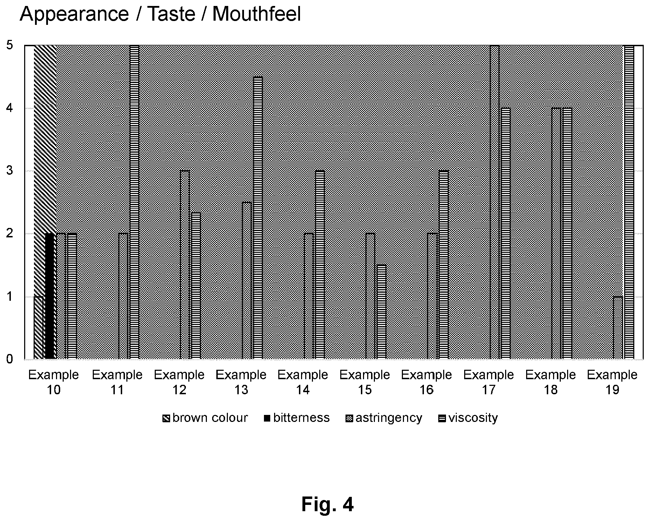

The resulting nut-based drinks were evaluated by a panel of five trained experts by consensus profiling, individually assessing a number of attributes on a 6 point-scale starting with «not detectable» (0) to «very intense» (5). The sensory evaluation included appearance, general taste and mouthfeel, orthonasal odour and retronasal odour, the results of which are shown in Figures 4, 5 and 6, respectively, wherein for Example 12 the average of three sample evaluations (i.e. two repetitions), and for Examples 13 and 15 the average of two sample evaluations (i.e. one repetition each) are given.

Figure 4 shows the results of attributes related to appearance (brown colour), taste (bitterness) and mouthfeel (viscosity, pieces). The attribute "brown colour" spreads from "not detectable" in Example 11 to intense in Examples 17. Especially the «roasted inshell» samples are darker brown in colour than the samples where shelled nuts were processed. Hazelnut drinks produced with roasted non-shelled hazelnut kernels tended to exhibit a slightly hiher bitterness in comparison to the other samples. Among the pure hazelnut drinks, Example 12 exhibited a medium astringency, while the other samples showed a rather weak expression in this attribute. In terms of mouthfeel, viscosity was shown to be inversely proportional to the dilution degree.

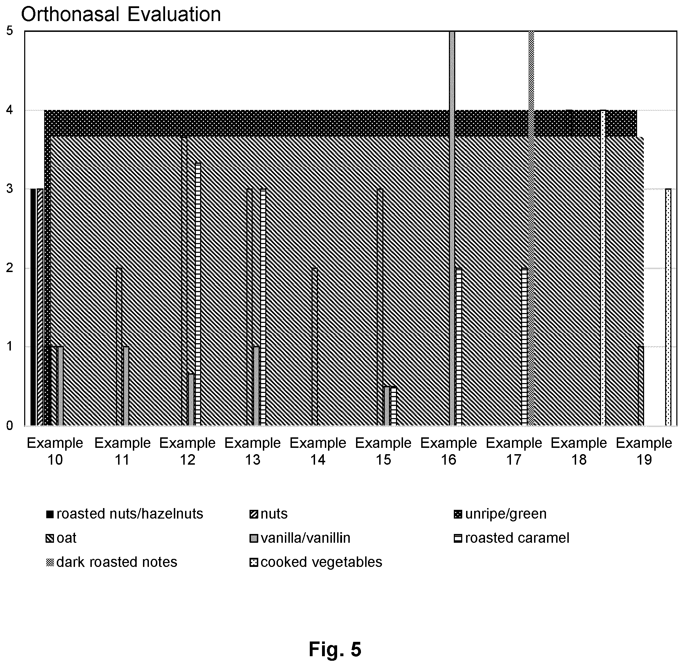

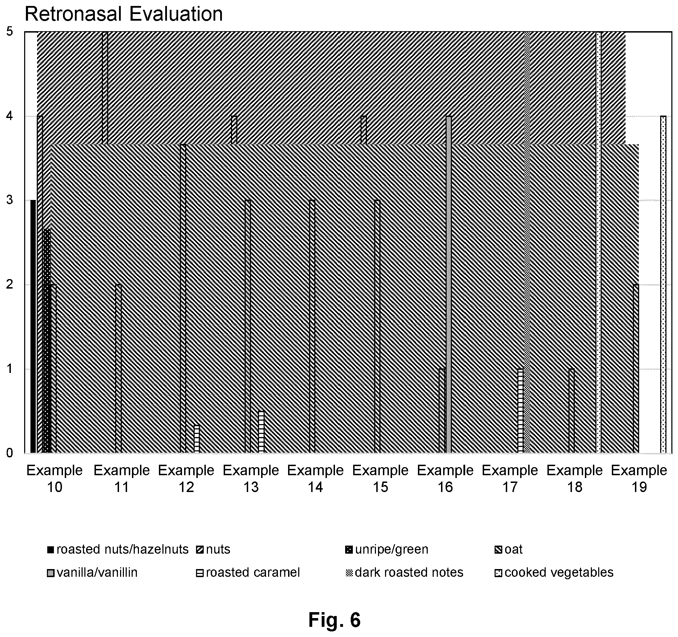

The ortho- and retronasal evaluation results shown in Figures 5 and 6 demonstrate that variations of the processing method and the selected raw materials enable a fine-tuning of desired attributes.

In general, it is emphasized that the trials were carried out with pure raw material (unroasted, roasted nuts with and without shell) and no additives (such as sugar, sweetener, or flavourings) except from natural additives such as coffee beans and vanilla pod were added to the mixtures during the processing. Against this background, the profiles of the samples can be considered as advantageously harmonious.

Once given the above disclosure, many other features, modifications, and improvements will become apparent to the skilled artisan.

## Claims

1. A method for processing culinary nuts, comprising the steps of:
a) adding water to culinary nuts selected from tree nuts, peanuts or drupe seeds to form a suspension;
b) wet grinding said suspension in one or more steps to an average particle size of less than 100 µm measured as volume moment mean (D[4,3]) by laser photometry; and
c) separating the suspension into at least a solid phase comprising culinary nut solids and a liquid phase comprising culinary nut milk; and
wherein the culinary nuts include a shell and the culinary nuts subjected to wet grinding are non-shelled, or
wherein the method further comprises adding culinary nut shell material ground to an average particle size of less than 100 µm measured as volume moment mean (D[4,3]) by laser photometry to the suspension in steps a) or b), or to at least one of the solid phase or liquid phase after step c), and the culinary nut shell material is selected from shell material from almonds, pecans, walnuts, cashews, pistachios, peanuts, kola nuts, palm nuts, hazelnuts, filberts, Brazil nuts, macadamia nuts, chestnuts, and mixtures thereof.

2. The method according to claim 1, wherein the culinary nuts subjected to wet grinding are selected from non-shelled hazelnuts, almonds, walnuts, cashews, pistachios, pecans, macadamia nuts, peanuts, and combinations thereof.

3. The method according to any one of claims 1 or 2, wherein the culinary nuts subjected to wet grinding include non-shelled hazelnuts, and wherein the method preferably further comprises a step of washing the non-shelled culinary nuts before step a).

4. The method according to claim 1, wherein the culinary nut shell material is added to the suspension in steps a) or b), and wherein the content of culinary nut shell material based on the content of total solids subjected to step a) or b) amounts to at least 0.1 wt.-% based on the total weight of solids.

5. The method according to any one of claims 1 or 4, wherein the culinary nut shell material is added to the solid phase after step c) in an amount of at least 0.1 wt.-% based on the total weight of solids.

6. The method according to any one of claims 1, 4 or 5, wherein culinary nut shell material is added to the liquid phase after step c) in an amount of 0.01 wt.-% to 10 wt.-% relative to the total weight of the liquid phase.

7. The method according to any one of claims 1 to 6, wherein step b) is performed by use of a toothed colloid mill and/or a ball mill.

8. The method according to any one of claims 1 to 7, wherein the culinary nuts are non-roasted before being subjected to step a) and each of the processing steps a) to c) are performed at temperatures in the range of 0°C to 65°C, preferably in the range of 0 to 40°C.

9. The method according to any one of claims 1 to 8, further comprising a step of subjecting the suspension to a maceration or fermentation step before step c).

10. The method according to any one of claims 1 to 9, further comprising a step of roasting the culinary nuts before step a) or the solid phase comprising culinary nut solids after step c), preferably at a temperature of more than 65°C and 200 °C or less, further preferably between 80 and 160°C, the roasting step being preferably performed on non-shelled culinary nuts before step a).

11. The method according to any one of claims 1 to 10, wherein steps a) to c) are carried out continuously in a time frame of less than 100 minutes, preferably less than 60 minutes, more preferably less than 20 minutes.

12. The method according to claim 4, wherein step c) comprises separating the suspension into a solid phase comprising culinary nut solids; a water phase (heavy phase), the water phase being the liquid phase comprising culinary nut milk; and a fat phase (light phase) comprising culinary nut oil.

13. The method according to claim 4 or 6, further comprising a step of sterilising the liquid phase, or the method according to claim 12, further comprising a step of pasteurising or sterilising the water phase, to provide culinary nut milk.

14. Culinary nut milk prepared by the method according to claim 13.

15. Solid phase obtained by a method according to any of claims 4 or 5.

16. Edible culinary nut-based products comprising the solid phase according to claim 15 or the culinary nut milk according to claim 14.

17. Culinary nut oil obtained by a method according to claim 12.

## Patentansprüche

1. Verfahren zur Verarbeitung von Speisennüssen, umfassend die Schritte:
a) Zugabe von Wasser zu Speisennüssen, ausgewählt aus Baumnüssen, Erdnüssen oder Steinfruchtsamen, um eine Suspension zu bilden;
b) ein- oder mehrstufige Nassvermahlung der Suspension auf eine durchschnittliche Teilchengröße von weniger als 100 µm, gemessen als Volumenmomentmittel (D[4,3]) durch Laserphotometrie; und
c) Trennen der Suspension in mindestens eine feste Phase, die Speisenussfeststoffe umfasst, und eine flüssige Phase, die Speisenussmilch umfasst;
wobei die Speisenüsse eine Schale umfassen und die Speisenüsse, die einer Nassvermahlung unterzogen werden, ungeschält sind, oder
wobei das Verfahren ferner die Zugabe von gemahlenem Speisenussschalenmaterial zu der Suspension in den Schritten a) oder b) oder zu mindestens einer der festen Phase oder flüssigen Phase nach Schritt c) umfasst, wobei das gemahlene Speisenussschalenmaterial auf eine durchschnittliche Teilchengröße von weniger als 100 µm, gemessen als Volumenmomentmittelwert (D[4,3]) durch Laserphotometrie, gemahlen wurde, und das Speisenussschalenmaterial aus Schalenmaterial von Mandeln, Pekannüssen, Walnüssen, Cashewnüssen, Pistazien, Erdnüssen, Kolanüssen, Palmnüssen, Haselnüssen, Filbertnüssen, Paranüssen, Macadamianüssen, Kastanien und Mischungen davon ausgewählt ist.

2. Verfahren gemäß Anspruch 1, wobei die der Nassvermahlung unterzogenen Speisenüsse aus ungeschälten Haselnüssen, Mandeln, Walnüssen, Cashewnüssen, Pistazien, Pekannüssen, Macadamianüssen, Erdnüssen und Kombinationen davon ausgewählt sind.

3. Verfahren gemäß einem der Ansprüche 1 oder 2, wobei die der Nassvermahlung unterzogenen Speisenüsse ungeschälte Haselnüsse umfassen und wobei das Verfahren vorzugsweise außerdem einen Schritt des Waschens der ungeschälten Speisenüsse vor Schritt a) umfasst.

4. Verfahren gemäß Anspruch 1, wobei das Speisenusschalenmaterial der Suspension in den Schritten a) oder b) zugegeben wird und wobei der Gehalt an Speisenusschalenmaterial, bezogen auf den Gehalt an Gesamtfeststoffen, die dem Schritt a) oder b) unterzogen wurden, mindestens 0,1 Gew.-% bezogen auf das Gesamtgewicht der Feststoffe beträgt.

5. Verfahren gemäß einem der Ansprüche 1 oder 4, wobei das Speisenussschalenmaterial zu der Feststoffphase nach Schritt c) in einer Menge von mindestens 0,1 Gew.-%, bezogen auf das Gesamtgewicht der Feststoffe, gegeben wird.

6. Verfahren gemäß einem der Ansprüche 1, 4 oder 5, wobei das Speisenussschalenmaterial zu der flüssigen Phase nach Schritt c) in einer Menge von 0,01 Gew.-% bis 10 Gew.-%, bezogen auf das Gesamtgewicht der flüssigen Phase, gegeben wird.

7. Verfahren gemäß einem der Ansprüche 1 bis 6, wobei Schritt b) unter Verwendung einer Zahnkolloidmühle und/oder einer Kugelmühle durchgeführt wird.

8. Verfahren gemäß einem der Ansprüche 1 bis 7, wobei die Speisennüsse vor der Durchführung von Schritt a) nicht geröstet wurden und jeder der Verfahrensschritte a) bis c) bei Temperaturen im Bereich von 0 °C bis 65 °C, vorzugsweise im Bereich von 0 bis 40 °C, durchgeführt wird.

9. Das Verfahren gemäß einem der Ansprüche 1 bis 8, ferner umfassend einen Schritt, bei dem die Suspension vor dem Schritt c) einem Mazerations- oder Fermentationsschritt unterzogen wird.

10. Verfahren gemäß einem der Ansprüche 1 bis 9, das ferner einen Schritt des Röstens der Speisennüsse vor Schritt a) oder der festen Phase, die Speisennussfeststoffe umfasst, nach Schritt c) umfasst, vorzugsweise bei einer Temperatur von mehr als 65 °C und 200 °C oder weniger, weiter vorzugsweise zwischen 80 und 160 °C, wobei der Röstschritt vorzugsweise an ungeschälten Speisennüssen vor Schritt a) durchgeführt wird.

11. Verfahren gemäß einem der Ansprüche 1 bis 10, wobei die Schritte a) bis c) kontinuierlich in einem Zeitrahmen von weniger als 100 Minuten, vorzugsweise weniger als 60 Minuten, besonders bevorzugt weniger als 20 Minuten, durchgeführt werden.

12. Verfahren gemäß Anspruch 4, wobei Schritt c) die Separation der Suspension in eine feste Phase umfassend Speisenussfeststoffe umfasst; eine Wasserphase (schwere Phase), wobei die Wasserphase die Speisenussmilch umfassende flüssige Phase ist; und eine Speisenussöl umfassende Fettphase (leichte Phase).

13. Verfahren gemäß Anspruch 4 oder 6, welches ferner einen Schritt des Sterilisierens der flüssigen Phase umfasst, oder Verfahren gemäß Anspruch 12, welches ferner einen Schritt des Pasteurisierens oder Sterilisierens der wässrigen Phase umfasst, um Speisenussmilch bereitzustellen.

14. Speisenussmilch, hergestellt durch das Verfahren gemäß Anspruch 13.

15. Feste Phase, erhalten durch ein Verfahren gemäß einem der Ansprüche 4 oder 5.

16. Essbare Produkte auf der Basis von Speisenüssen, die die feste Phase gemäß Anspruch 15 oder die Speisenussmilch gemäß Anspruch 14 umfassen.

17. Speisenussöl, das durch ein Verfahren gemäß Anspruch 12 gewonnen wird.

## Revendications

1. Procédé de transformation de noix culinaires, comprenant les étapes consistant à :
a) ajouter de l'eau à des noix culinaires sélectionnées parmi des noix d'arbre, des arachides ou des noyaux de drupe pour former une suspension ;
b) broyer à l'état humide ladite suspension en une ou plusieurs étapes jusqu'à une taille moyenne de particule inférieure à 100 µm mesurée sous la forme d'une moyenne de moment volumique (D[4, 3]) par photométrie laser ; et
c) séparer la suspension en au moins une phase solide comprenant des matières solides de noix culinaires et une phase liquide comprenant du lait de noix culinaires ; et
dans lequel les noix culinaires incluent une coque et les noix culinaires soumises au broyage à l'état humide ne sont pas décortiquées, ou
dans lequel le procédé comprend en outre l'addition d'un matériau de coque de noix culinaires broyées jusqu'à une taille moyenne de particule inférieure à 100 µm mesurée sous la forme d'une moyenne de moment volumique (D[4, 3]) par photométrie laser à la suspension dans les étapes a) ou b), ou jusqu'à au moins l'une de la phase solide ou de la phase liquide après l'étape c), et le matériau de coque de noix culinaires est sélectionné à partir d'un matériau de coque provenant d'amandes, de noix de pécan, de noix, de noix de cajou, de pistaches, d'arachides, de noix de cola, de noix de palme, de noisettes, d'aveline, de noix du Brésil, de noix de macadamia, de châtaignes, et de leurs mélanges.

2. Procédé selon la revendication 1, dans lequel les noix culinaires soumises au broyage à l'état humide sont sélectionnées parmi les noisettes, les amandes, les noix, les noix de cajou, les pistaches, les noix de pécan, les noix de macadamia, les arachides non décortiquées, et les combinaisons de celles-ci.

3. Procédé selon l'une quelconque des revendications 1 ou 2, dans lequel les noix culinaires soumises au broyage à l'état humide incluent les noisettes non décortiquées, et dans lequel le procédé comprend en outre préférablement une étape de lavage des noix culinaires non décortiquées avant l'étape a).

4. Procédé selon la revendication 1, dans lequel le matériau de coque de noix culinaires est ajouté à la suspension dans les étapes a) ou b), et dans lequel la teneur du matériau de coque de noix culinaires sur la base de la teneur des matières solides totales soumises à l'étape a) ou b) s'élève à au moins 0,1 % en pds sur la base du poids total des matières solides.

5. Procédé selon l'une quelconque des revendications 1 ou 4, dans lequel le matériau de coque de noix culinaires est ajouté à la phase solide après l'étape c) en une quantité d'au moins 0,1 % en pds sur la base du poids total des matières solides.

6. Procédé selon l'une quelconque des revendications **1,** 4 ou **5,** dans lequel le matériau de coque de noix culinaires est ajouté à la phase liquide après l'étape c) en une quantité de 0,01 % en pds à 10 % en pds par rapport au poids total de la phase liquide.

7. Procédé selon l'une quelconque des revendications 1 à **6,** dans lequel l'étape b) est effectuée en utilisant un broyeur colloïdal denté et/ou un broyeur à boulets.

8. Procédé selon l'une quelconque des revendications 1 à **7,** dans lequel les noix culinaires ne sont pas torréfiées avant d'être soumises à l'étape a) et chacune des étapes de traitement a) à c) est effectuée à des températures situées dans la plage de 0°C à 65°C, préférablement dans la plage de 0 à 40°C.

9. Procédé selon l'une quelconque des revendications 1 à 8, comprenant en outre une étape de soumission de la suspension à une étape de macération ou de fermentation avant l'étape c).

10. Procédé selon l'une quelconque des revendications 1 à **9,** comprenant en outre une étape de torréfaction des noix culinaires avant l'étape a) ou la phase solide comprenant des matières solides de noix culinaires après l'étape c), préférablement à une température inférieure à 65°C et 200°C ou moins, préférablement de manière supplémentaire entre 80 et 160°C, l'étape de torréfaction étant préférablement exécutée sur des noix culinaires non décortiquées avant l'étape a) .

11. Procédé selon l'une quelconque des revendications 1 à 10, dans lequel les étapes a) à c) sont conduites de manière continue dans un cadre de temps inférieur à 100 minutes, préférablement inférieur à 60 minutes, plus préférablement inférieur à 20 minutes.

12. Procédé selon la revendication 4, dans lequel l'étape c) comprend la séparation de la suspension en une phase solide comprenant des matières solides de noix culinaires ; une phase aqueuse (phase lourde), la phase aqueuse étant la phase liquide comprenant le lait de noix culinaires ; et une phase grasse (phase légère) comprenant de l'huile de noix culinaires.

13. Procédé selon la revendication 4 ou 6, comprenant en outre une étape de stérilisation de la phase liquide, ou procédé selon la revendication 12, comprenant en outre une étape de pasteurisation ou de stérilisation de la phase aqueuse, pour fournir du lait de noix culinaires.

14. Lait de noix culinaires préparé par le procédé selon la revendication 13.

15. Phase solide obtenue par un procédé selon l'une quelconque des revendications 4 ou 5.

16. Produits à base de noix culinaires comestibles comprenant la phase solide selon la revendication 15 ou lait de noix culinaires selon la revendication 14.

17. Huile de noix culinaires obtenue par un procédé selon la revendication 12.
